(19) 

Europäisches Patentamt

European Patent Office

Office européen des brevets

(11) **EP 4 057 733 A1**

(12) **EUROPEAN PATENT APPLICATION**
published in accordance with Art. 153(4) EPC

(43) Date of publication:
**14.09.2022 Bulletin 2022/37**

(21) Application number: **19951906.7**

(22) Date of filing: **08.11.2019**

(51) International Patent Classification (IPC):
**H04W 72/04** (2009.01)

(52) Cooperative Patent Classification (CPC):
**H04W 72/04**

(86) International application number:
**PCT/JP2019/044021**

(87) International publication number:
**WO 2021/090508 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Chiyoda-ku**
**Tokyo 100-6150 (JP)**

(72) Inventors:
• **TAKAHASHI, Yuki**
  **Tokyo 100-6150 (JP)**
• **NAGATA, Satoshi**
  **Tokyo 100-6150 (JP)**
• **WANG, Lihui**
  **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL AND WIRELESS COMMUNICATION METHOD**

(57) A terminal according to an aspect of the present disclosure includes a receiving section that receives, in a control resource set, downlink control information including a time domain resource allocation field, and a control section that judges, when a first slot in which the control resource set is configured differs from a second slot in which a shared channel scheduled by the downlink control information is transmitted, a position of allocation of the shared channel on the basis of a reference point that is configured in the first slot or the second slot.

FIG. 4A

TDRA : S=2, L=2, K0=1

1 SYMBOL　　SLOT #0　　SLOT #1

CORESET　　REFERENCE POINT　　PDSCH

**(Cont. next page)**

FIG. 4B

TDRA : S=4, L=2, K0=1

1 SYMBOL             SLOT #0                    SLOT #1

CORESET

REFERENCE POINT

PDSCH

**Description**

Technical Field

The present disclosure relates to a terminal and a radio communication method in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In existing LTE systems (e.g., 3GPP Rel. 8 to Rel. 14), a user terminal (UE (User Equipment)) controls reception of a downlink shared channel (e.g., a PDSCH (Physical Downlink Shared Channel)) on the basis of downlink control information (also referred to as "DCI," "DL assignment," and so on) from a base station. The user terminal also controls transmission of an uplink shared channel (e.g., a PUSCH (Physical Uplink Shared Channel)) on the basis of the DCI (also referred to as a "UL grant" and so on).

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

SUMMARY OF INVENTION

Technical Problem

For future radio communication systems (hereinafter referred to as "NR"), scheduling of a shared channel by downlink control information (DCI) and the like are under study. For example, a UE judges a time domain resource allocation of a shared channel on the basis of information regarding the time domain resource allocation included in DCI and a reference point.

On the other hand, in future radio communication systems, it is conceivable that transmission timings of DCI and a shared channel scheduled by the DCI and the like are configured with flexibility. For example, a case where DCI and a shared channel scheduled by the DCI are transmitted in a different slot is conceivable. Alternatively, a case where a different numerology (e.g., subcarrier spacing) is adopted to DCI and a shared channel scheduled by the DCI is conceivable.

However, in such cases, control of transmission and reception of the shared channel is not sufficiently studied regarding how to use the reference point and the time domain resource allocation information included in the DCI.

Thus, an object of the present disclosure is to provide a terminal and a radio communication method that can communicate appropriately even when downlink control information and transmission of a shared channel are configured with flexibility. Solution to Problem

A terminal according to an aspect of the present disclosure includes a receiving section that receives, in a control resource set, downlink control information including a time domain resource allocation field, and a control section that judges, when a first slot in which the control resource set is configured differs from a second slot in which a shared channel scheduled by the downlink control information is transmitted, a position of allocation of the shared channel on the basis of a reference point that is configured in the first slot or the second slot.

Advantageous Effects of Invention

According to one aspect of the present disclosure, it is possible to appropriately communicate even when downlink control information and transmission of a shared channel are configured with flexibility.

BRIEF DESCRIPTION OF DRAWINGS

FIGS. 1A and 1B are diagrams to show an example of control of PDSCH allocation;
FIG. 2 is a diagram to show an example of a configuration of a reference point in Rel. 16;
FIG. 3 is a diagram to show an example of scheduling in a case where subcarrier spacing of DCI differs from subcarrier spacing of a PDSCH scheduled by the DCI;
FIGS. 4A and 4B are diagrams to show an example of a configuration of a reference point according to a first aspect;
FIG. 5 is a diagram to show another example of a configuration of the reference point according to the first aspect;
FIG. 6 is a diagram to show an example of a configuration of a reference point according to a second aspect;
FIG. 7 is a diagram to show another example of a configuration of the reference point according to the second aspect;
FIG. 8 is a diagram to show another example of a configuration of the reference point according to the second aspect;
FIG. 9 is a diagram to show another example of a configuration of the reference point according to the second aspect;
FIG. 10 is a diagram to show another example of a configuration of the reference point according to the second aspect;
FIG. 11 is a diagram to show another example of a configuration of the reference point according to the second aspect;
FIG. 12 is a diagram to show another example of a configuration of the reference point according to the second aspect;
FIG. 13 is a diagram to show another example of a configuration of the reference point according to the second aspect;
FIG. 14 is a diagram to show an example of a schematic structure of a radio communication system according to one embodiment;
FIG. 15 is a diagram to show an example of a structure of a base station according to one embodiment;
FIG. 16 is a diagram to show an example of a structure of a user terminal according to one embodiment; and
FIG. 17 is a diagram to show an example of a hardware structure of the base station and the user terminal according to one embodiment.

DESCRIPTION OF EMBODIMENTS

In an existing system (e.g., Rel. 15), downlink control information (DCI) includes information about time domain resource allocation of a physical shared channel (at least one of a PDSCH and a PUSCH). A network (e.g., a base station) uses a given field (e.g., a TDRA field) included in DCI to notify a UE of at least one of information (e.g., time offset K0) regarding a slot for allocation of a physical shared channel scheduled by the DCI, a starting symbol (S), and a length (L).

Each piece of bit information (or each of code points) notified in the TDRA field may be associated with different time domain resource allocation candidates (or entries). For example, a table (e.g., a TDRA table) may be defined such that each piece of the bit information is associated with the time domain resource allocation candidates (K0, S, and L).

<Time Domain Resource Allocation>

[PDSCH]

A size (the number of bits) of the TDRA field in DCI (DL assignment, for example, DCI format 1_0 or 1_1) used for scheduling of the PDSCH may be fixed or variable.

For example, the size of the TDRA field in DCI format 1_0 may be fixed to a given number of bits (e.g., 4 bits). On the other hand, the size of the TDRA field in DCI format 1_1 may be the number of bits (e.g., from 0 to 4 bits) that is varied by a given parameter.

The above-described given parameter used for the determination of the size of the TDRA field may be, for example, the number of entries in a list (PDSCH time domain allocation list) of time domain allocation to the PDSCH (or downlink data).

For example, the PDSCH time domain allocation list may be, for example, "pdsch-TimeDomainAllocationList" or "PDSCH-TimeDomainResourceAllocationList" that is an RRC control element. The PDSCH time domain allocation list may also be used for configuration of a time-domain relationship between a PDCCH and a PDSCH. Each of the entries in the PDSCH time domain allocation list may also be referred to as information (PDSCH time domain allocation information) about time domain resource allocation to a PDSCH or the like, and may be, for example, "PDSCH-TimeDomainResourceAllocation" that is an RRC control element.

The PDSCH time domain allocation list may also be included in a cell-specific PDSCH parameter (e.g., an RRC control element "pdsch-ConfigCommon"), or may be included in a UE-dedicated parameter (UE-dedicated parameter applied to a specific BWP), (e.g., an RRC control element "pdsch-Config"). As described above, the PDSCH time domain allocation list may be specific to a cell, or may be dedicated for the UE.

Each piece of the PDSCH time domain allocation information in the PDSCH time domain allocation list may include at least one of information (also referred to as "offset information," "K0 information," and so on) indicating time offset K0 (also referred to as "k0," "$K_0$," and so on) between DCI and the PDSCH scheduled by the DCI, information (mapping type information) indicating a mapping type of the PDSCH, and a starting symbol S and a time length L of the PDSCH. A combination of the starting symbol S and the time length L of the PDSCH may also be referred to as a Start and Length Indicator (SLIV).

Alternatively, the above-described given parameter used for the determination of the size of the TDRA field may be the number of entries of a default table (e.g., default PDSCH time domain allocation A) for time domain allocation to the PDSCH or to downlink data. The default table may be predetermined by a specification. Each row of the default table may be associated with at least one of a row index, information indicating a position of a DMRS, the above-described mapping type information, the above-described K0 information, information indicating the starting symbol S of the PDSCH, and information indicating the number L of symbols allocated to the PDSCH.

The UE may determine a row index (entry number or entry index) of a given table on the basis of a value of a TDRA field in DCI (e.g., DCI format 1_0 or 1_1). The given table may be a table based on the above-described PDSCH time domain allocation list, or may be the above-described default table.

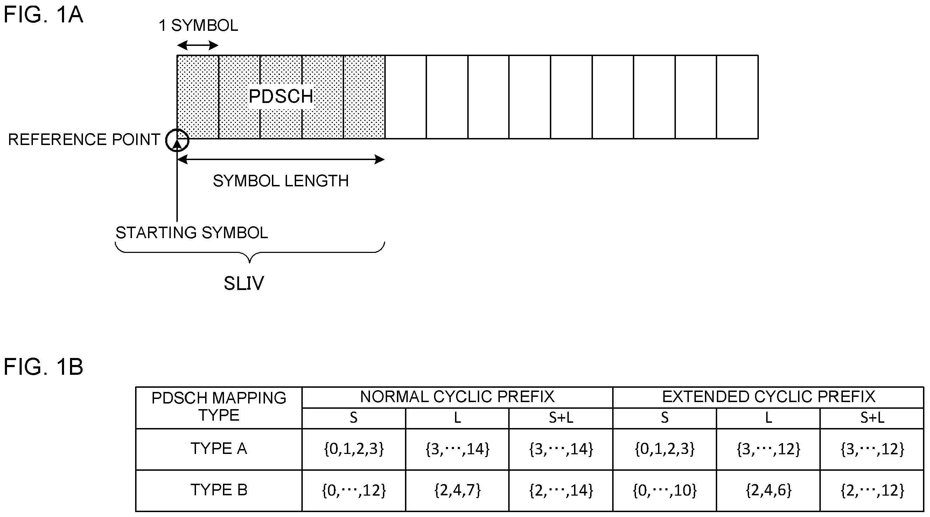

The UE may determine a time domain resource (e.g., a given number of symbols) allocated to the PDSCH in given slot(s) (one or a plurality of slots) on the basis of at least one of K0 information, a mapping type, a starting symbol S, a symbol length L, and an SLIV that are defined by a row (or an entry) corresponding to the row index (see FIG. 1A). Note that a reference point of the starting symbol S and the symbol length L is controlled on the basis of a starting position (leading symbol) of a slot. The starting symbol S, the symbol length L, and the like may be defined depending on a mapping type of the PDSCH (see FIG. 1B).

As shown in FIG. 1A, in the existing system (e.g., Rel. 15), a reference point that serves as a reference for a judgment about time domain resource allocation (TDRA) is defined at a starting point of a slot that is a boundary of the slot. The UE determines, with respect to resource allocation information (e.g., an SLIV) designated in a TDRA field, allocation of a shared channel using a starting point of a slot to which a physical shared channel is allocated as a reference. Note that the reference point may be referred to as a reference location.

Note that the above-described K0 information may indicate time offset K0 between DCI and the PDSCH scheduled by the DCI by using the number of slots. The UE may determine a slot for receiving the PDSCH in accordance with the time offset K0. For example, when receiving DCI that schedules the PDSCH in slot #n, the UE may determine a slot (allocated to the PDSCH) that receives the PDSCH on the basis of at least one of the slot number n, subcarrier spacing $\mu_{PDSCH}$ for a PDSCH, subcarrier spacing $\mu_{PDCCH}$ for a PDCCH, and the above-described time offset K0.

[PUSCH]

A size (the number of bits) of the TDRA field in DCI (a UL grant, for example, DCI format 0_0 or 0_1) used for scheduling of the PUSCH may be fixed or variable.

For example, the size of the TDRA field in DCI format 0_0 may be fixed to a given number of bits (e.g., 4 bits). On the other hand, the size of the TDRA field in DCI format 0_1 may be the number of bits (e.g., from 0 to 4 bits) that is varied by a given parameter.

The above-described given parameter used for the determination of the size of the TDRA field may be, for example, the number of entries in a list (PUSCH time domain allocation list) of time domain allocation to the PUSCH (or uplink data).

For example, the PUSCH time domain allocation list may be, for example, "pusch-TimeDomainAllocationList" or "PUSCH-TimeDomainResourceAllocationList" that is an RRC control element. Each of the entries in the PUSCH time domain allocation list may also be referred to as information (PUSCH time domain allocation information) about time domain resource allocation to a PUSCH or the like, and may be, for example, "PUSCH-TimeDomainResourceAllocation" that is an RRC control element.

The PUSCH time domain allocation list may also be included in a cell-specific PUSCH parameter (e.g., an RRC control element "pusch-ConfigCommon"), or may be included in a UE-dedicated parameter (UE-dedicated parameter applied to a specific bandwidth part (BWP), e.g., an RRC control element "pusch-Config") the UE. As described above, the PUSCH time domain allocation list may be specific to a cell, or may be dedicated for the UE.

Each piece of the PUSCH time domain allocation information in the PUSCH time domain allocation list may include at least one of information (offset information or K2 information) indicating time offset K2 (also referred to as "k2," "$K_2$," and so on) between DCI and the PUSCH scheduled by the DCI, information indicating a mapping type of the PUSCH (mapping type information), and an index (Start and Length Indicator (SLIV)) that assigns a combination of a starting symbol and a time length of the PUSCH.

Alternatively, the above-described given parameter used for the determination of the size of the TDRA field may be the number of entries of a default table (e.g., default PUSCH time domain allocation A) for time domain allocation to the PUSCH or to uplink data. The default table may be predetermined by a specification. Each row of the default table may be associated with at least one of a row index, the above-described mapping type information, the above-described K2 information, information indicating a starting symbol S of the PUSCH, and information indicating the number L of symbols allocated to the PUSCH.

The UE may determine a row index (entry number or entry index) of a given table on the basis of a value of a TDRA field in DCI (e.g., DCI format 0_0 or 0_1). The given table may be a table based on the above-described PUSCH time domain allocation list, or may be the above-described default table.

The UE may determine a time domain resource (e.g., a given number of symbols) allocated to the PUSCH in given slot(s) (one or a plurality of slots) on the basis of at least one of K2 information, an SLIV, a starting symbol S, and a time length L that are defined by a row (or an entry) corresponding to the row index.

Note that the above-described K2 information may indicate time offset K2 between DCI and the PUSCH scheduled by the DCI by using the number of slots. The UE may determine a slot for transmitting the PUSCH in accordance with the time offset K2. For example, when receiving DCI that schedules the PUSCH in slot #n, the UE may determine a slot (allocated to the PUSCH) that transmits the PUSCH on the basis of at least one of the slot number n, subcarrier spacing $\mu_{PUSCH}$ for a PUSCH, subcarrier spacing $\mu_{PDCCH}$ for a PDCCH, and the above-described time offset K2.

Incidentally, future radio communication systems (e.g., Rel. 16) requires a reduced size of a TDRA field included in DCI. For example, for Rel. 16 or later versions, introduction or support of a new DCI format used for a specified service (e.g., URLLC) is under study, and a reduced size of the new DCI format is assumed.

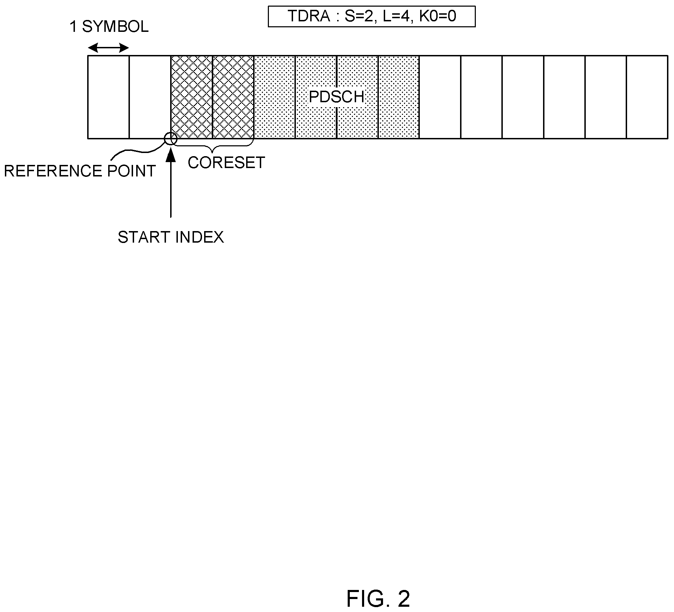

Thus, in Rel. 16 or later versions, it is conceivable that a reference point of time domain resource allocation (TDRA) of a physical shared channel is changed. FIG. 2 is a diagram to show an example of the reference point of time domain resource allocation. FIG. 2 shows a case where DCI is transmitted in a control resource set (CORESET) configured at symbols #2 and #3 of a given slot and a physical shared channel (e.g., a PDSCH) is scheduled at symbols #4 to #7 of the given slot by the DCI.

FIG. 2 shows a case where the reference point of time domain resource allocation is configured at a start index (e.g., leading symbol #2) of the control resource set. In this case, time domain resource allocation information notified by the DCI is S = 2, L = 4, and K0 = 0.

The case shown in FIG. 2 allows notification information about time domain resource allocation to be reduced in comparison to the existing system (e.g., Rel. 15) that uses a starting position (or a leading symbol) of a slot as the reference point.

On the other hand, in future radio communication systems, it is assumed that transmission timings and allocation of DCI and a physical shared channel scheduled by the DCI are controlled with further flexibility. For example, it is assumed that a case where a slot in which DCI is transmitted differs from a slot in which a physical shared channel is scheduled occurs.

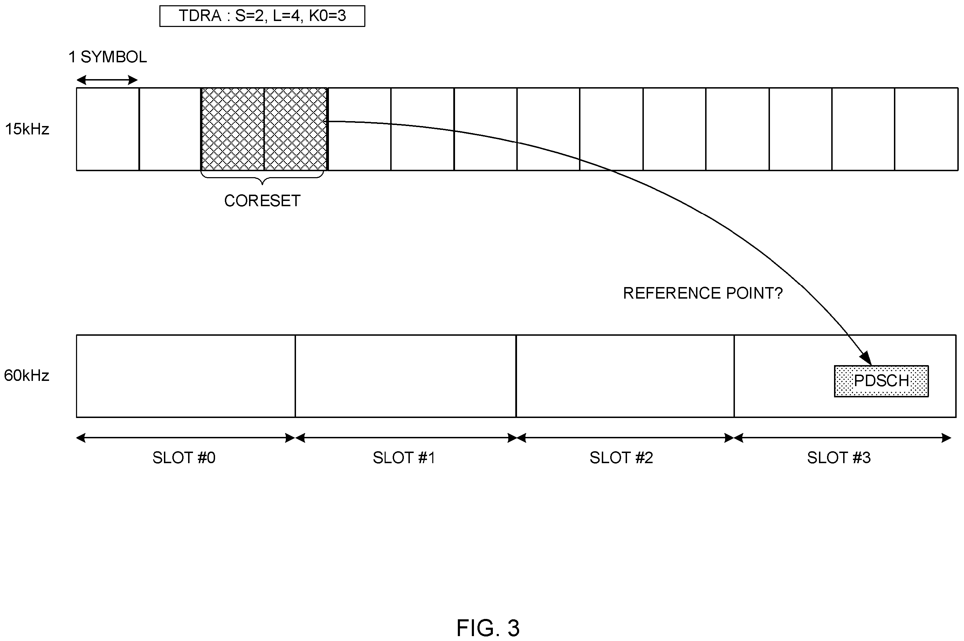

Alternatively, it is assumed that a case where a numerology (e.g., subcarrier spacing) used for transmission of DCI differs from a numerology used for transmission of a physical shared channel occurs (see FIG. 3). FIG. 3 shows an example of a case where a PDSCH to which second subcarrier spacing (60 kHz) is applied is scheduled by DCI to which first subcarrier spacing (15 kHz) is applied.

In such cases, a challenge is how to configure the reference point of time domain resource allocation. When the reference point is inappropriately configured, a time domain allocation of a physical shared channel is inappropriately performed, and thus communication quality may deteriorate.

The inventors of the present invention focused on a case (K0 > 0 or K2 > 0) where DCI and a physical shared channel scheduled by the DCI are arranged in a different slot, and came up with the idea of an aspect of the present invention by considering a configuration of the reference point in such a case.

The inventors of the present invention focused on a case (a case where SCS (or $\mu$) corresponding to DCI differs from SCS (or $\mu$) corresponding to a physical shared channel) where DCI and a physical shared channel scheduled by the DCI are transmitted using a different numerology (e.g., subcarrier spacing), and came up with the idea of other aspects of the present invention by considering a configuration of the reference point in such a case.

Embodiments according to the present disclosure will be described in detail hereinafter with reference to the drawings. Each aspect may be employed independently, or may be employed in combination. Although aspects below will be described by an example of a downlink shared channel (PDSCH), the aspects may also be employed in an uplink shared channel (PUSCH). In descriptions below, DCI, a PDCCH, and a control resource set may be interpreted interchangeably.

Aspects below are not necessarily limited to a structure in which a size of DCI is changed (e.g., reduced), and may also be employed in DCI including a TDRA field. For example, aspects below may be employed in DCI formats 0_0, 0_1, and 0_2 that schedule a PUSCH and in DCI formats 1_0, 1_1, and 1_2 that schedule a PDSCH.

(First Aspect)

In a first aspect, a reference point of TDRA in a case (K0 > 0 or K2 > 0) where DCI and a shared channel scheduled by the DCI are arranged in different slots will be described. A case where K0 > 0 or K2 > 0 may be referred to as cross-slot scheduling.

A UE determines a position of allocation of a shared channel on the basis of the reference point configured in any one of slots when DCI (or a control resource set in which DCI is transmitted) and the shared channel scheduled by the DCI are transmitted in different slots. For example, a configuration of the reference point may be any one of options 1-1 to 1-3 below.

<Option 1-1>

Assume a case (e.g., K0 > 0) where a first slot in which a control resource set is configured (or in which DCI is transmitted) differs from a second slot in which a PDSCH scheduled by the DCI is transmitted. In this case, the reference point may be configured in the second slot on the basis of a position of the control resource set in the first slot (or on the basis of a symbol index at which the control resource set is configured).

For example, the reference point may be configured at a symbol that is among symbols of the second slot and has a same index as an index of a given symbol at which the control resource set is configured in the first slot. In other words, the reference point (when K0 = 0) of the control resource set in the first slot may be referred to as the reference point in the second slot.

When the control resource set is configured at a plurality of symbols, at least one symbol may be the given symbol. The given symbol may be a leading symbol or a last symbol of the control resource set.

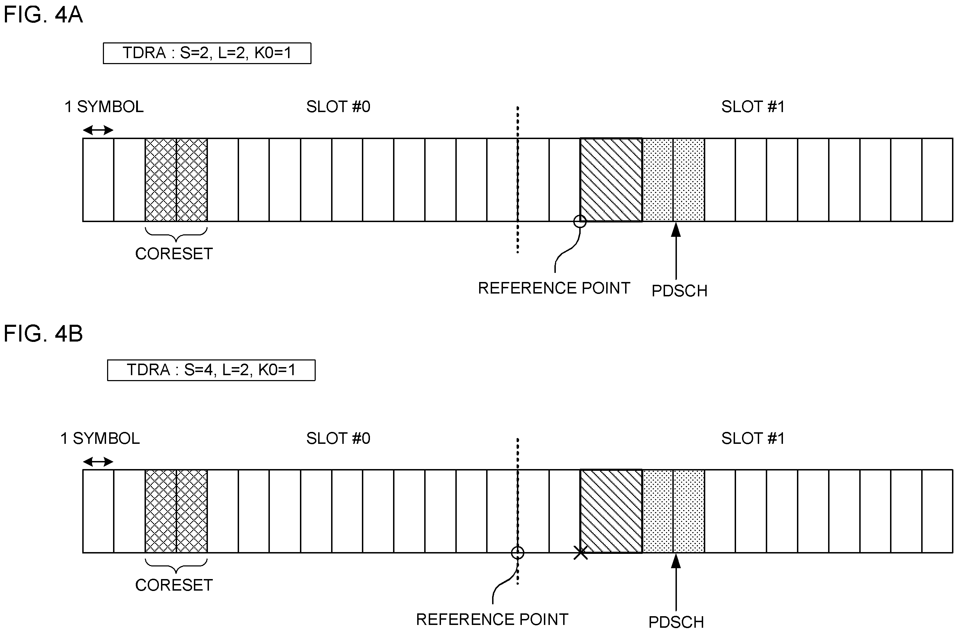

FIG. 4A is a diagram to show an example of a case (K0 = 1) where a control resource set in which DCI is transmitted and a PDSCH scheduled by the DCI are arranged in different slots. FIG. 4A shows a case where DCI is transmitted in a control resource set configured at symbols #2 and #3 of slot #0 and a PDSCH is scheduled at symbols #4 and #5 of slot #1 by the DCI.

In this case, the reference point is configured at symbol #2 of slot #1 with reference to or in consideration of a symbol (here, a leading symbol) index (e.g., #2) of the control resource set. In this case, time domain resource allocation information notified by the DCI is S = 2, L = 2, and K0 = 1.

Thus, TDRAD (e.g., a value of S) notified by the DCI can be reduced even when K0 > 0, thereby allowing an increase of a size of a TDRA field included in the DCI to be suppressed.

Note that the reference point may be configured at a leading symbol (e.g., symbol #2) of the control resource set in slot #0 in a case (K0 = 0) where the PDSCH is scheduled in slot #0 that is a same slot as the DCI (or the control resource set). In other words, the configuration of the reference point may be controlled depending on a value of K0 (e.g., in a case where K0 = 0 and a case where K0 > 0).

<Option 1-2>

The reference point may be configured at a specified symbol of the second slot in which the PDSCH is scheduled. For example, the reference point may be configured at a leading symbol of the second slot. Alternatively, the reference point may be configured at a slot boundary between the second slot and a slot (the first slot when K0 = 1) before the second slot.

FIG. 4B is a diagram to show an example of a case (K0 = 1) where a control resource set in which DCI is transmitted and a PDSCH scheduled by the DCI are arranged in different slots. FIG. 4B shows a case where DCI is transmitted in a control resource set configured at symbols #2 and #3 of slot #0 and a PDSCH is scheduled at symbols #4 and #5 of slot #1 by the DCI.

In this case, the reference point is configured at specified symbol (here, leading symbol) #0 of slot #1 in which the PDSCH is scheduled, or is configured at a slot boundary. In this case, time domain resource allocation information notified by the DCI is S = 4, L = 2, and K0 = 1.

The reference point is configured at a leading symbol (or a slot boundary) of a slot in which the PDSCH is scheduled, thereby allowing TDRAD (e.g., a value of S) notified by the DCI to be reduced even when K0 > 0. A starting position of the PDSCH can be appropriately notified even when the PDSCH is scheduled at a leading symbol (or symbol #1 and so on) of slot #1.

Note that the reference point may be configured at a leading symbol (e.g., symbol #2) of the control resource set in slot #0 in a case (K0 = 0) where the PDSCH is scheduled in slot #0 that is a same slot as the DCI (or the control resource set). In other words, when K0 = 0, the reference point may be configured on the basis of a symbol at which the control resource set is configured, and when K0 > 0, the reference point may be configured on the basis of the slot boundary.

As described above, the configuration of the reference point is controlled depending on a value of K0 (e.g., in a case where K0 = 0 and a case where K0 > 0), thereby allowing notification of TDRA to be controlled with flexibility.

<Option 1-3>

The reference point may be configured at a symbol at which a control resource set is configured (or at which DCI is transmitted). In other words, the reference point may be configured regardless of a slot or a symbol at which the PDSCH is transmitted. When the control resource set is configured at a plurality of symbols, the reference point may be configured at at least one symbol (e.g., a leading symbol or a last symbol).

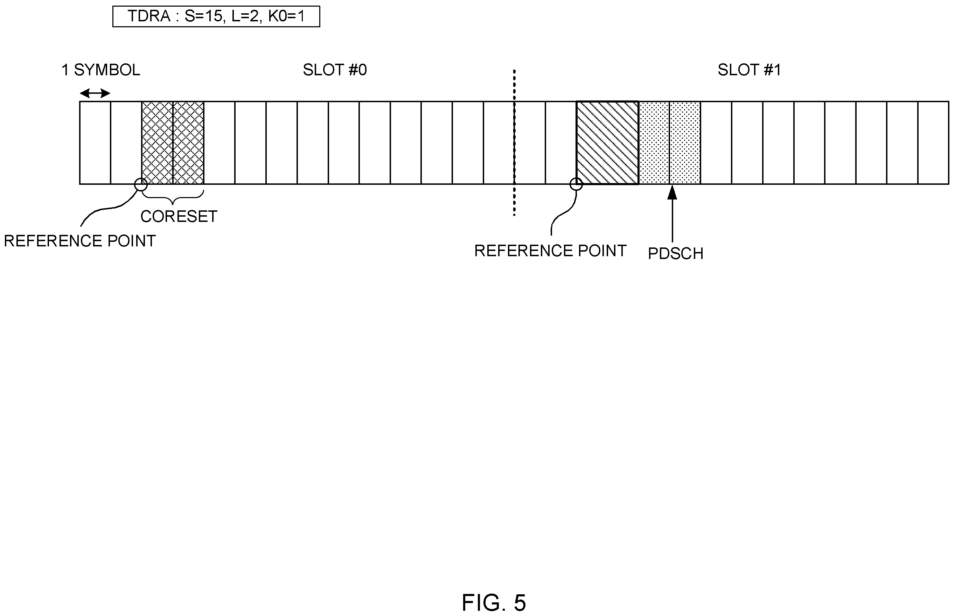

FIG. 5 is a diagram to show an example of a case (K0 = 1) where a control resource set in which DCI is transmitted and a PDSCH scheduled by the DCI are arranged in different slots. FIG. 5 shows a case where DCI is transmitted in a control resource set configured at symbols #2 and #3 of slot #0 and a PDSCH is scheduled at symbols #4 and #5 of slot #1 by the DCI.

In this case, the reference point may be configured at a symbol (e.g., leading symbol #2) of the control resource set in slot #0. In this case, time domain resource allocation information notified by the DCI is S = 15, L = 2, and K0 = 1.

Note that the reference point may be configured at a leading symbol (e.g., symbol #2) of the control resource set in slot #0 in a case (K0 = 0) where the PDSCH is scheduled in slot #0 that is a same slot as the DCI (or the control resource set). In other words, the reference point in a case where K0 = 0 may be configured to be the same as the reference point in a case where K0 > 0.

Thus, the configuration of the reference point can be simplified.

Note that reference point determination methods according to options 1-1 to 1-3 may be employed in combination. For example, a base station may configure the reference point determination methods that the UE employs for the UE by higher layer signaling and the like.

(Second Aspect)

In a second aspect, a reference point of TDRA in a case where DCI and a physical shared channel scheduled by the DCI are transmitted at different subcarrier spacing (e.g., SCS) will be described. The second aspect may be employed in scheduling (e.g., cross-carrier scheduling) between a plurality of carriers that apply different subcarrier spacing, or may be employed in scheduling between a plurality of partial bands (e.g., BWPs).

When first SCS used for transmission of DCI (or a control resource set) differs from second SCS used for transmission of a PDSCH scheduled by the DCI, the reference point may be configured at a given symbol of a slot in which the PDSCH is transmitted. Note that a first slot in which the DCI (or the control resource set) is transmitted and a second slot in which the PDSCH is scheduled may be the same or different from each other.

The given symbol may be determined on the basis of at least one of a symbol position or a symbol index corresponding to the DCI (or the control resource set) and a relationship (e.g., a ratio) between the first SCS and the second SCS. Alternatively, the given symbol may be a leading symbol (or a slot boundary) of a slot in which the PDSCH is transmitted, or may be a symbol that corresponds to a sub-slot boundary. For example, a configuration of the reference point may be any one of options 2-1 to 2-4.

<Option 2-1>

Assume a case where first SCS corresponding to a control resource set (or DCI) differs from second SCS (the first SCS < the second SCS) to which a PDSCH scheduled by the DCI corresponds. In other words, the case is equivalent to a case where a PDSCH with larger subcarrier spacing is scheduled by a PDCCH (or DCI) with smaller subcarrier spacing.

In this case, the reference point may be configured in the second slot in which the PDSCH is scheduled on the basis of a position of the control resource set in the first slot (or on the basis of a symbol index at which the control resource set is configured).

For example, the reference point may be configured at a symbol that is among symbols of the second slot and has a same index as an index of a given symbol at which the control resource set is configured in the first slot.

When the control resource set is configured at a plurality of symbols, an index of at least one symbol (e.g., a leading symbol or a last symbol of the control resource set) may be referred to.

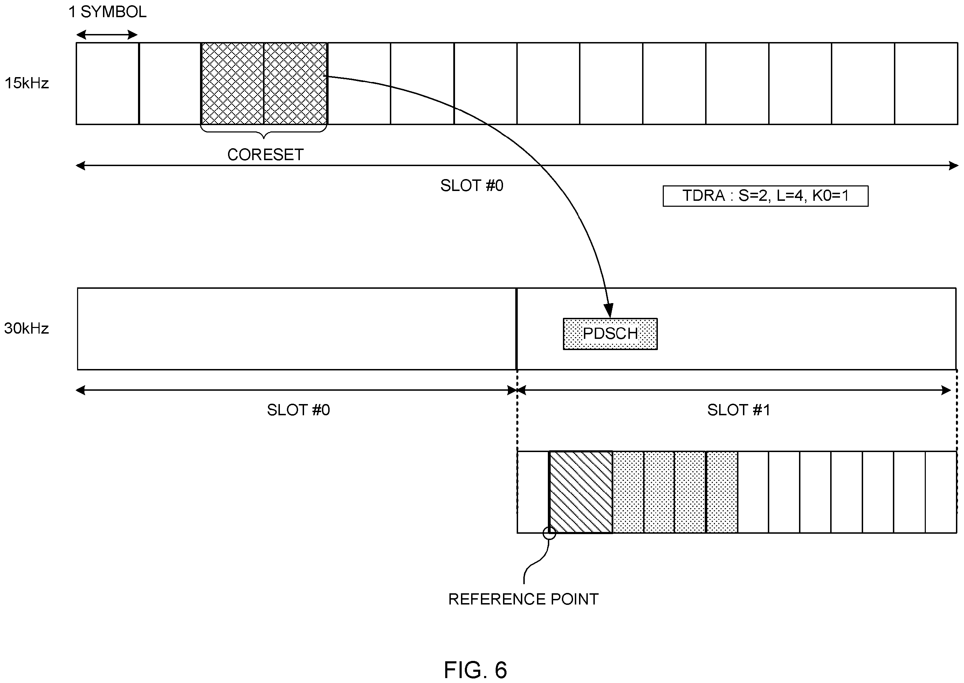

FIG. 6 is a diagram to show an example of a configuration of the reference point in a case where first SCS (here, 15 kHz) applied to transmission of DCI (or a control resource set) differs from second SCS (here, 30 kHz) applied to transmission of a PDSCH scheduled by the DCI.

In this example, the DCI (or the control resource set) to which the first SCS is applied is allocated to symbols #1 and #2 of slot #0. FIG. 6 also shows a case where the PDSCH to which the second SCS is applied is scheduled at symbols #3 to #6 of slot #1 by the DCI.

In this case, the reference point is configured at symbol #1 of slot #1 with reference to or in consideration of symbol (here, a leading symbol) index #1 of the control resource set. In this case, time domain resource allocation information notified by the DCI is S = 2, L = 4, and K0 = 1.

For example, it is assumed that two symbols (here, symbols #1 and #2) of the control resource set to which the first SCS is applied are configured at two symbols (here, symbols #1 and #2) of a slot (slot #1) for allocation of the PDSCH to which the second SCS is applied. The reference point may be a leading symbol of the control resource set in which allocation in the second slot is assumed.

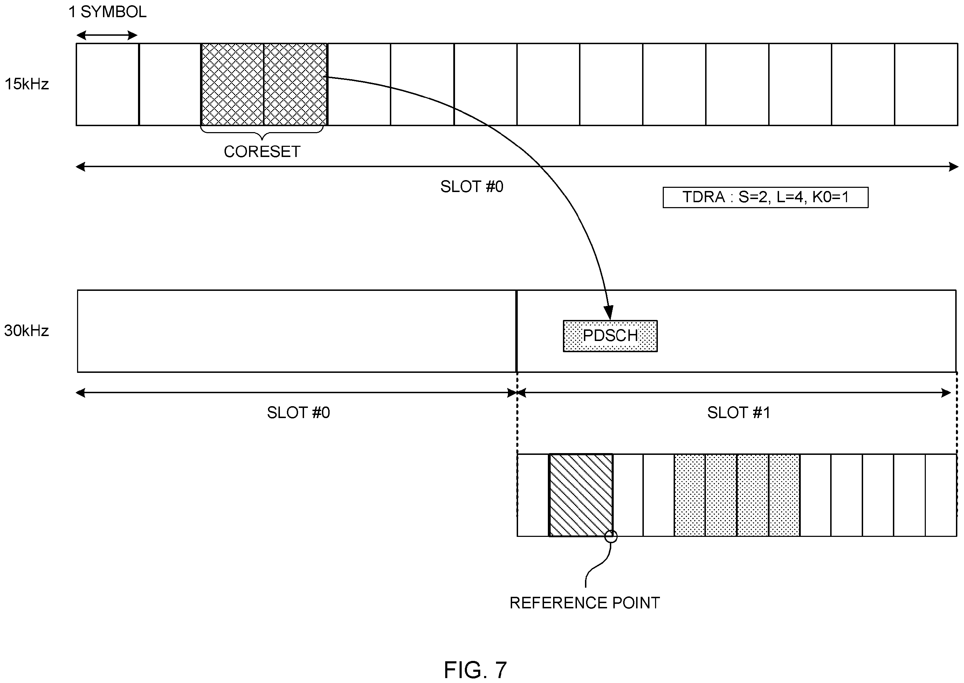

Although FIG. 6 shows a case where an index of the leading symbol of the control resource set is referred to or taken into consideration, the second aspect is not limited to this. For example, the reference point may be configured with reference to or in consideration of an index (or last symbol index +1) of a last symbol of the control resource set (see FIG. 7). FIG. 6 shows a case where the reference point is configured at symbol #3 of slot #1 at the second SCS.

In FIG. 7, when time domain resource allocation information notified by the DCI is S = 2, L = 4, and K0 = 1, the PDSCH is scheduled at symbols #5 to #8 of slot #1.

As described above, when the first SCS corresponding to the DCI (or the control resource set) differs from the second SCS corresponding to the PDSCH, the reference point may be configured in a slot in which the PDSCH is scheduled in consideration of a position of the control resource set. Thus, TDRAD (e.g., a value of S) notified by the DCI can be reduced, thereby allowing an increase of a size of a TDRA field included in the DCI to be suppressed.

Note that the reference point may be configured at leading symbol #1 or last symbol #2 of the control resource set in slot #0 in a case (K0 = 0) where the PDSCH is scheduled in slot #0 that is a same slot as the DCI (or the control resource set).

<Option 2-2>

Although the option 2-1 shows a case where the reference point in the second slot is determined such that a symbol index or the number of symbols of the control resource set is directly referred to (e.g., a fixed control resource set period) even when the first SCS differs from the second SCS, the second aspect is not limited to this. For example, the reference point in the second slot may be determined in consideration of a relationship (e.g., a ratio or a proportion) between the first SCS and the second SCS.

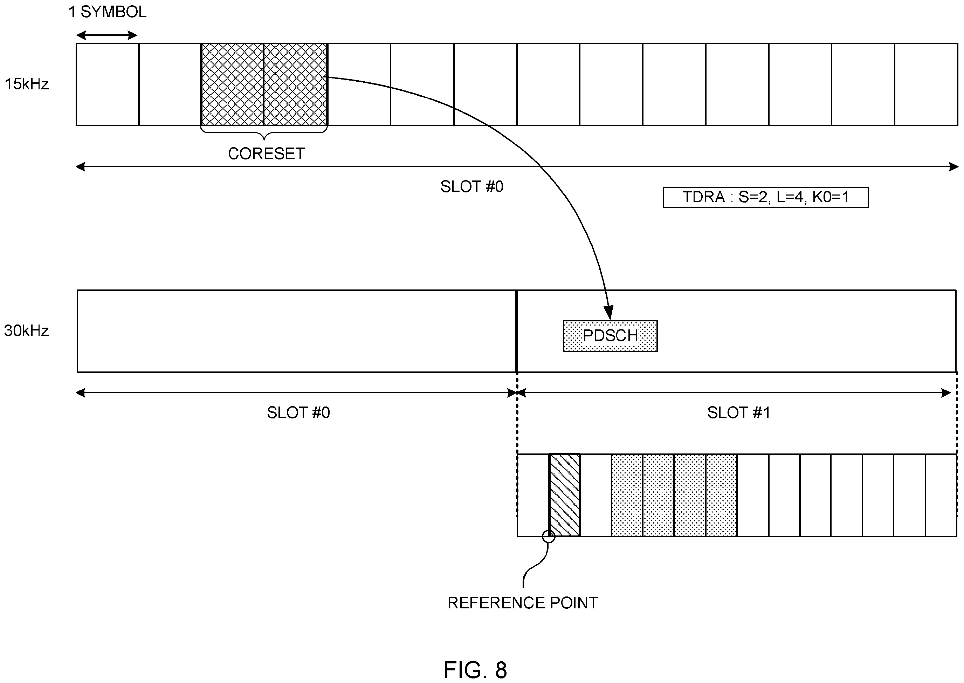

FIG. 8 is a diagram to show an example of a case where the reference point is configured in consideration of the relationship between the first SCS (here, 15 kHz) and the second SCS (here, 30 kHz) .

In this example, the DCI (or the control resource set) to which the first SCS is applied is allocated to symbols #1 and #2 of slot #0. FIG. 8 also shows a case where the PDSCH to which the second SCS is applied is scheduled at symbols #3 to #6 of slot #1 by the DCI.

In this case, the reference point may be determined with reference to or in consideration of the number of symbols and a symbol index of the control resource set that are obtained on the basis of the relationship between the first SCS and the second SCS. Here, the number of symbols of the control resource set may be the number of symbols (e.g., $N_{symb}^{CORESET, \mu PDSCH}$) of a control resource set corresponding to the second slot in which the PDSCH is scheduled. $N_{symb}^{CORESET, \mu PDSCH}$ may be computed using a calculation equation (e.g., Equation (1) or Equation (2) below) that includes a parameter of the first SCS and a parameter of the second SCS.

[Math. 1]

$$\text{Equation (1)}$$

$$N_{symb}^{CORESET, \mu PDSCH} = \left\lceil \frac{N_{symb}^{CORESET, \mu PDCCH}}{2^{\mu PDSCH - \mu PDCCH}} \right\rceil$$

[Math. 2]

$$\text{Equation (2)}$$

$$N_{symb}^{CORESET, \mu PDSCH} = \left\lfloor \frac{N_{symb}^{CORESET, \mu PDCCH}}{2^{\mu PDSCH - \mu PDCCH}} \right\rfloor$$

$N_{symb}^{CORESET, \mu PDSCH}$: the number of symbols of a control resource set in a slot in which a PDCCH is transmitted:

μPDSCH: a value corresponding to subcarrier spacing applied to a PDSCH
μPDCCH: a value corresponding to subcarrier spacing applied to a PDCCH

For example, the above-described Equation (1) or Equation (2) is applied to the first SCS (15 kHz, μ = 0) applied to the DCI (or the PDCCH), the second SCS (30 kHz, μ = 1) applied to the PDSCH, and the control resource set with two symbols. In such a case, the number of symbols (e.g., $N_{symb}^{CORESET, \mu PDSCH}$) of the control resource set corresponding to the second slot in which the PDSCH is scheduled is 1.

Thus, it may be assumed that the two symbols (here, symbols #1 and #2) of the control resource set to which the first SCS is applied are configured at one symbol (here, symbol #1) of slot #1 for allocation of the PDSCH to which the second SCS is applied (see FIG. 8). A position to which the control resource set corresponds in slot #1 at the second SCS may be determined on the basis of an index (e.g., a leading index) of the control resource set in slot #0 at the first SCS.

The reference point may be configured at symbol #1 of slot #1 with reference to or in consideration of symbol (here, a leading symbol) index #1 of the control resource set. In this case, time domain resource allocation information notified by the DCI is S = 2, L = 4, and K0 = 1.

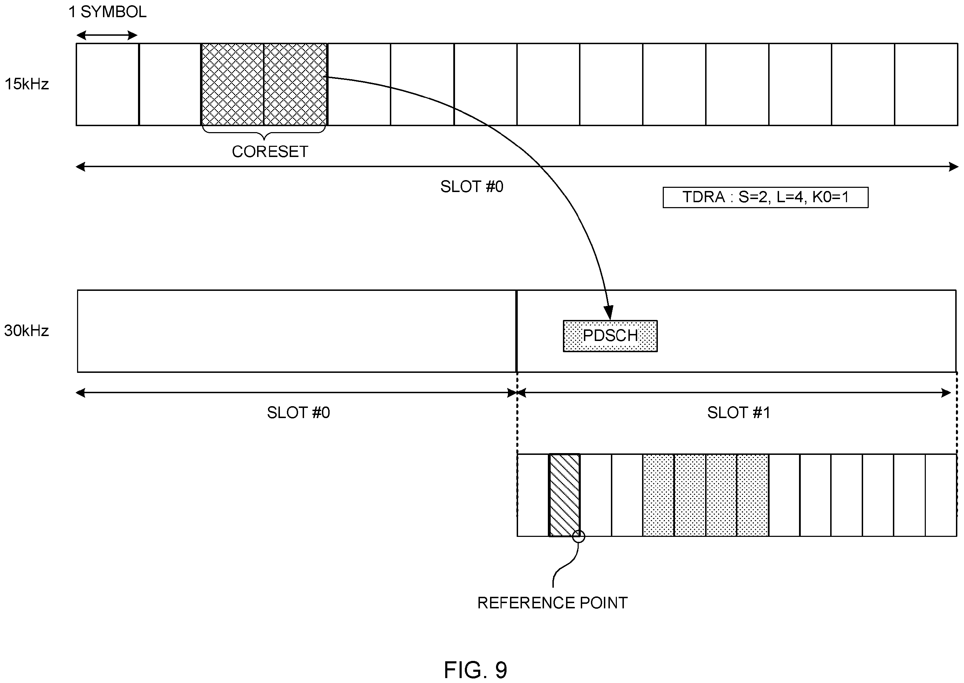

Note that the reference point may be configured with reference to or in consideration of an index (or last symbol index +1) of a last symbol of the control resource set (see FIG. 9). In FIG. 9, when time domain resource allocation information notified by the DCI is S = 2, L = 4, and K0 = 1, the PDSCH is scheduled at symbols #4 to #7 of slot #1.

As described above, when the reference point is determined on the basis of the control resource set, the relationship between the first SCS corresponding to the DCI (or the control resource set) and the second SCS corresponding to the PDSCH may be considered. The reference point can therefore be appropriately determined on the basis of a position of the control resource set even when the first SCS differs from the second SCS considerably.

<Option 2-3>

The reference point may be configured at a specified symbol of the second slot in which the PDSCH is scheduled. For example, the reference point may be configured at a leading symbol of the second slot. Alternatively, the reference point may be configured at a slot boundary between the second slot and a slot (the first slot when K0 = 1) before the second slot. Alternatively, the reference point may be configured at a sub-slot boundary or a mini-slot boundary in the second slot.

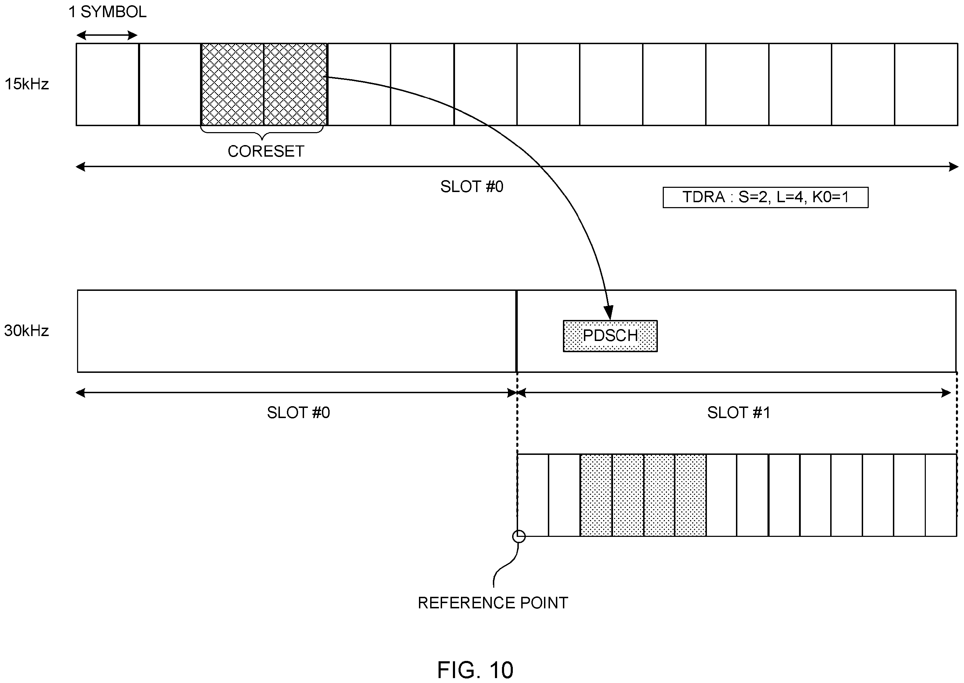

FIG. 10 is a diagram to show an example of a configuration of the reference point in a case where the first SCS (here, 15 kHz) applied to transmission of DCI (or a control resource set) differs from the second SCS (here, 30 kHz) applied to transmission of the PDSCH scheduled by the DCI.

In this example, the DCI (or the control resource set) to which the first SCS is applied is allocated to symbols #1 and #2 of slot #0. FIG. 10 also shows a case where the PDSCH to which the second SCS is applied is scheduled at symbols #2 to #5 of slot #1 by the DCI.

In FIG. 10, the reference point is configured at specified symbol (here, leading symbol) #0 of slot #1 in which the PDSCH is scheduled, or is configured at a slot boundary. In this case, time domain resource allocation information notified by the DCI is S = 2, L = 4, and K0 = 1.

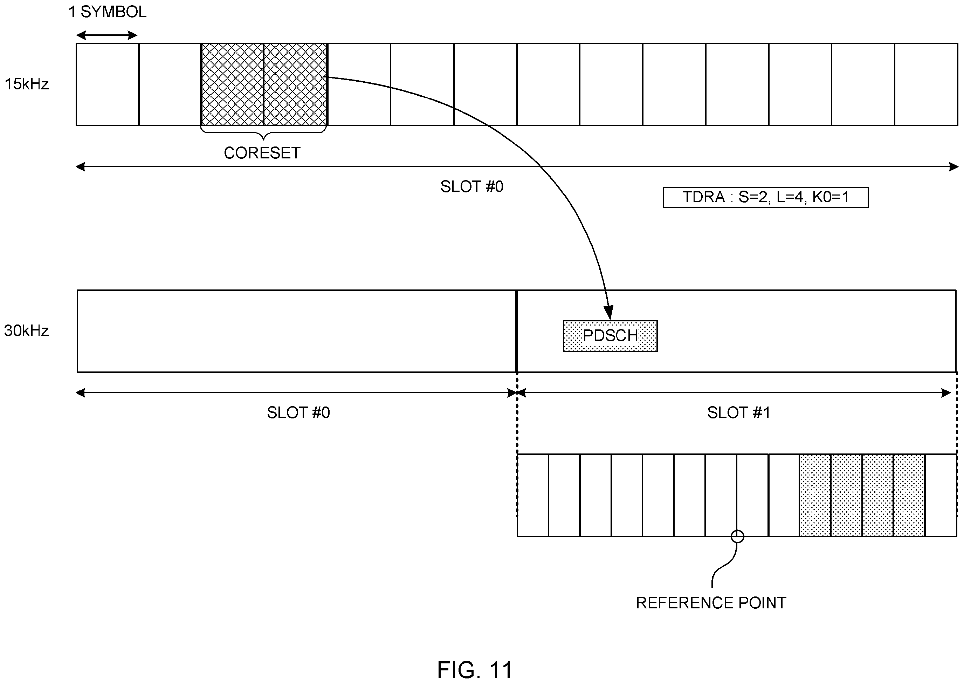

Alternatively, the reference point may be configured at a sub-slot boundary (here, symbol #7) of slot #1 in which the PDSCH is scheduled (see FIG. 11). When time domain resource allocation information notified by the DCI is S = 2, L = 4, and K0 = 1, the PDSCH is scheduled at symbols #9 to #12 of slot #1.

The reference point can be configured at a sub-slot boundary, thereby allowing TDRAD (e.g., a value of S) notified by the DCI in a case where the PDSCH is scheduled in a latter half of a slot to be reduced. Thus, an increase of a size of a TDRA field included in the DCI can be suppressed.

<Option 2-4>

Although the options 2-1 to 2-3 show a case where the first SCS < the second SCS, the second aspect is not limited to this. For example, the reference point may be similarly configured in a case of the first SCS > the second SCS (a case where a PDSCH with smaller subcarrier spacing is scheduled by a PDCCH (or DCI) with larger subcarrier spacing).

For example, the reference point may be configured in the second slot in which the PDSCH is scheduled on the basis of a position of the control resource set in the first slot (or on the basis of a symbol index at which the control resource set is configured). In this case, the reference point in the second slot may be determined such that an index of the control resource set in the first slot corresponding to the first SCS is directly referred to.

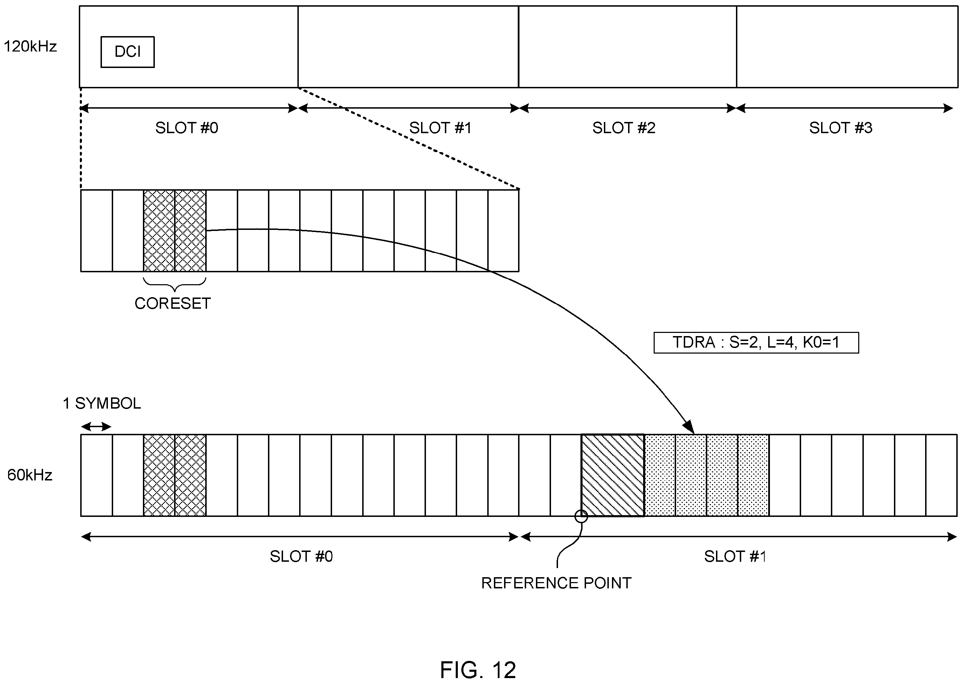

FIG. 12 is a diagram to show an example of a configuration of the reference point in a case where the first SCS (here, 120 kHz) applied to transmission of DCI (or a control resource set) differs from the second SCS (here, 60 kHz) applied to transmission of the PDSCH scheduled by the DCI.

In this example, the DCI (or the control resource set) to which the first SCS is applied is allocated to symbols #2 and #3 of slot #0. FIG. 12 also shows a case where the PDSCH to which the second SCS is applied is scheduled at symbols #4 to #7 of slot #1 by the DCI.

In this case, the reference point is configured at symbol #2 of slot #1 with reference to or in consideration of symbol (here, a leading symbol) index #2 of the control resource set. In this case, time domain resource allocation information notified by the DCI is S = 2, L = 4, and K0 = 1.

For example, it is assumed that two symbols (here, symbols #2 and #3) of the control resource set to which the first SCS is applied are configured at two symbols (here, symbols #2 and #3) of a slot (slot #1) for allocation of the PDSCH to which the second SCS is applied. The reference point may be a leading symbol of the control resource set in which allocation in the second slot is assumed.

Although FIG. 12 shows a case where an index of the leading symbol of the control resource set is referred to or taken into consideration, the second aspect is not limited to this. For example, the reference point may be configured with reference to or in consideration of an index (or last symbol index +1) of a last symbol of the control resource set.

As described above, when the first SCS corresponding to the DCI (or the control resource set) differs from the second SCS corresponding to the PDSCH, the reference point may be configured in a slot in which the PDSCH is scheduled in consideration of a position of the control resource set. Thus, TDRAD (e.g., a value of S) notified by the DCI can be reduced, thereby allowing an increase of a size of a TDRA field included in the DCI to be suppressed.

Alternatively, as described in the option 2-2, the reference point in the second slot may be determined in consideration of a relationship (e.g., a ratio or a proportion) between the first SCS and the second SCS.

When the first SCS > the second SCS, the number of symbols (e.g., $N_{symb}^{CORESET, \mu PDSCH}$) of the control resource set corresponding to the second slot may be computed on the basis of Equation (3) below.

[Math. 3]

Equation (3)

$$N_{symb}^{CORESET, \mu PDSCH} = N_{symb}^{CORESET, \mu PDCCH} * 2^{\mu PDCCH - \mu PDSCH}$$

For example, the above-described Equation (3) is applied with respect to the first SCS (120 kHz, $\mu$ = 3) applied to the DCI (or the PDCCH), the second SCS (60 kHz, $\mu$ = 2) applied to the PDSCH, and the control resource set with two symbols. In such a case, the number of symbols (e.g., $N_{symb}^{CORESET, \mu PDSCH}$) of the control resource set corresponding to the second slot in which the PDSCH is scheduled is 4.

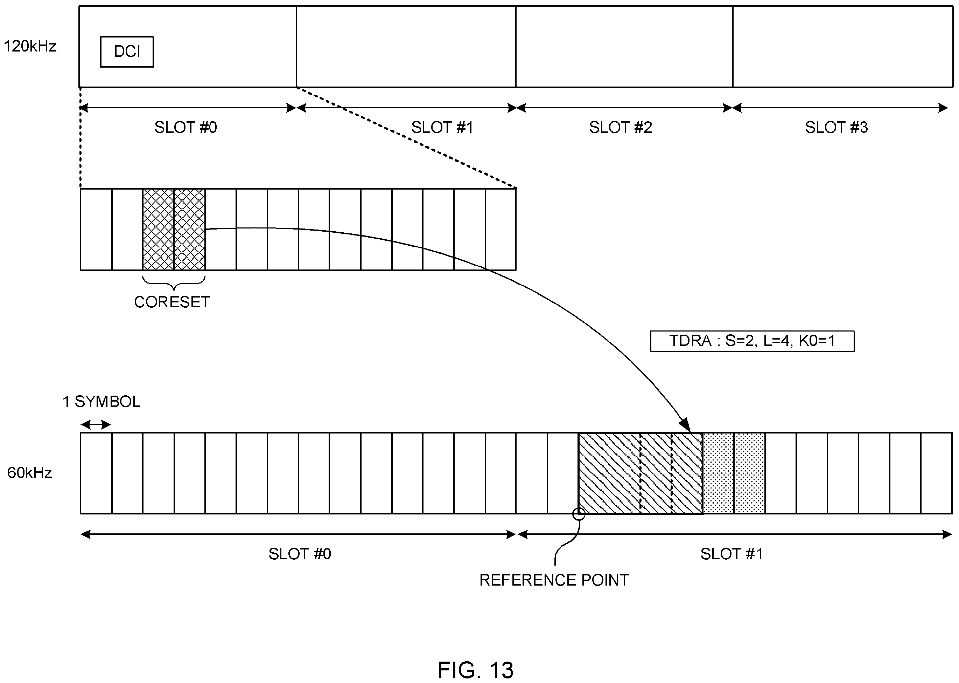

Thus, it may be assumed that the two symbols (here, symbols #2 and #3) of the control resource set to which the first SCS is applied are configured at four symbols (here, symbols #2 to #5) of slot #1 for allocation of the PDSCH to which the second SCS is applied (see FIG. 13).

The reference point may be configured at symbol #2 of slot #1 with reference to or in consideration of symbol (here, a leading symbol) index #1 of the control resource set. In this case, time domain resource allocation information notified by the DCI is S = 2, L = 4, and K0 = 1.

Note that the reference point may be configured with reference to or in consideration of an index (or last symbol index +1) of a last symbol of the control resource set.

As described above, when the reference point is determined on the basis of the control resource set, the relationship between the first SCS corresponding to the DCI (or the control resource set) and the second SCS corresponding to the PDSCH may be considered. The reference point can therefore be appropriately determined on the basis of a position of the control resource set even when the first SCS differs from the second SCS considerably.

Note that reference point determination methods according to options 2-1 to 2-4 may be employed in combination. For example, a base station may configure the reference point determination methods that the UE employs for the UE by higher layer signaling and the like.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

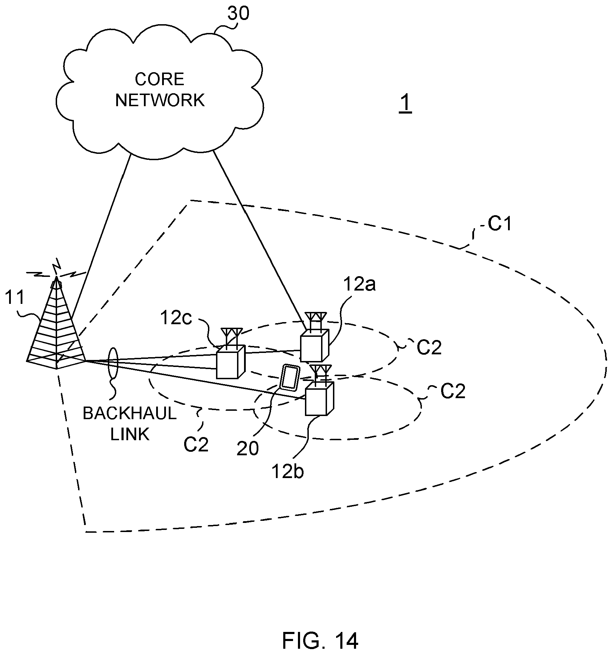

FIG. 14 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CC) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

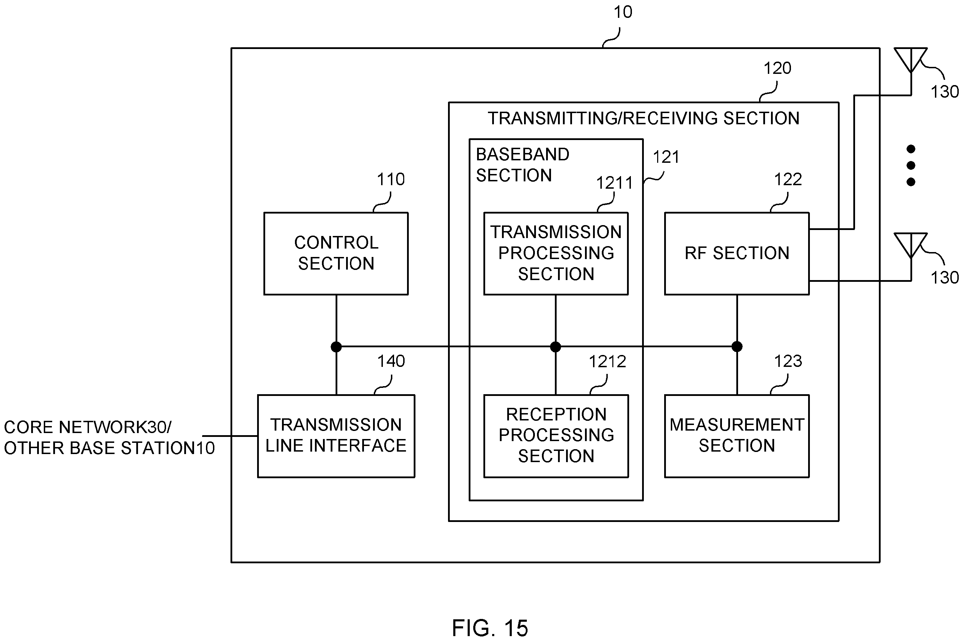

FIG. 15 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit, in a control resource set, downlink control information including a time domain resource allocation field.

When a first slot in which the control resource set is configured differs from a second slot in which a shared channel scheduled by the downlink control information is transmitted, the control section 110 may control allocation of the shared channel on the basis of a reference point configured in the first slot or the second slot.

When first subcarrier spacing used for transmission of the downlink control information differs from second subcarrier spacing used for transmission of the shared channel scheduled by the downlink control information, the control section 110 may control allocation of the shared channel on the basis of a reference point configured in a slot in which the shared channel is transmitted.

(User Terminal)

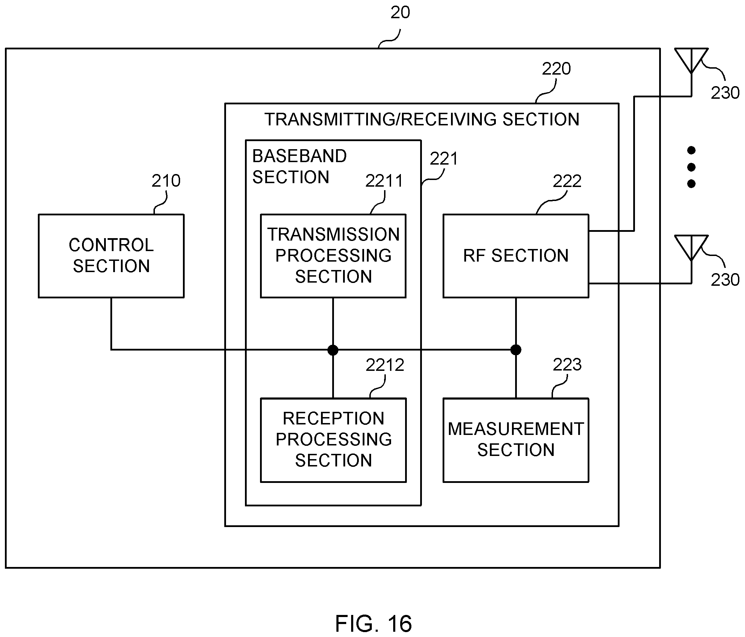

FIG. 16 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 receives, in a control resource set, downlink control information including a time domain resource allocation field.

When a first slot in which the control resource set is configured differs from a second slot in which a shared channel scheduled by the downlink control information is transmitted, the control section 210 may determine a position of allocation of the shared channel on the basis of a reference point configured in the first slot or the second slot.

The reference point may be configured at any one of symbols at which the control resource set is configured in the first slot. Alternatively, the reference point may be configured at a symbol that is among symbols of the second slot and has a same index as an index of a symbol at which the control resource set is configured in the first slot. Alternatively, the reference point may be configured at a leading symbol of the second slot. Note that a first reference point that is configured when the first slot and the second slot are the same may differ from a second reference point that is configured when the first slot differs from the second slot.

Alternatively, when first subcarrier spacing used for transmission of the downlink control information differs from second subcarrier spacing used for transmission of the shared channel scheduled by the downlink control information, the control section 210 may determine a position of allocation of the shared channel on the basis of a reference point configured in a slot in which the shared channel is transmitted.

The reference point may be configured at a symbol that is among symbols of a slot in which the shared channel is transmitted and has a same index as an index of a symbol at which a control resource set is configured. Alternatively, the reference point may be configured at a symbol that is among symbols of a slot in which a shared channel is transmitted and has a same index as a symbol index to which the control resource set computed on the basis of a relationship between first subcarrier spacing and second subcarrier spacing corresponds. Alternatively, the reference point may be configured at a leading symbol of a slot in which the shared channel is transmitted, or may be configured at a leading symbol of a sub-slot in which the shared channel is transmitted.

When a plurality of symbols corresponding to the control resource set exists, the control section 210 may determine the reference point on the basis of an index of a specified symbol among the plurality of the symbols.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

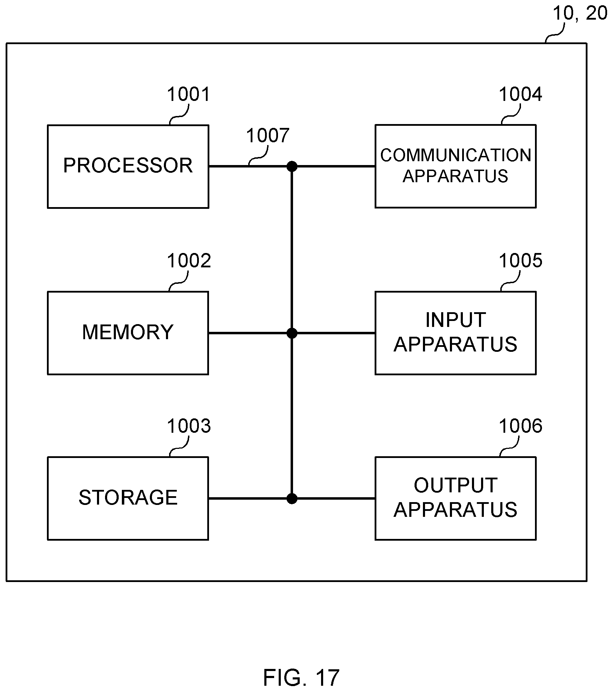

For example, a base station, a user terminal, and so on according to one embodiment of the present disclosure may function as a computer that executes the processes of the radio communication method of the present disclosure. FIG. 17 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on).

Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG)," a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:

   a receiving section that receives, in a control resource set, downlink control information including a time domain resource allocation field; and
   a control section that judges, when a first slot in which the control resource set is configured differs from a second slot in which a shared channel scheduled by the downlink control information is transmitted, a position of allocation of the shared channel on the basis of a reference point that is configured in the first slot or the second slot.

2. The terminal according to claim 1, wherein
   the reference point is configured at any one of symbols at which the control resource set is configured in the first slot.

3. The terminal according to claim 1, wherein
   the reference point is configured at a symbol among symbols of the second slot, the symbol having a same index as an index of a symbol at which the control resource set is configured in the first slot.

4. The terminal according to claim 1, wherein
   the reference point is configured at a leading symbol of the second slot.

5. The terminal according to claim 1, wherein
   a first reference point that is configured when the first slot and the second slot are the same differs from a second reference point that is configured when the first slot differs from the second slot.

6. A radio communication method comprising:

receiving, in a control resource set, downlink control information including a time domain resource allocation field; and

judging, when a first slot in which the control resource set is configured differs from a second slot in which a shared channel scheduled by the downlink control information is transmitted, a position of allocation of the shared channel on the basis of a reference point that is configured in the first slot or the second slot.

## FIG. 1A

1 SYMBOL

PDSCH

REFERENCE POINT

SYMBOL LENGTH

STARTING SYMBOL

SLIV

## FIG. 1B

| PDSCH MAPPING TYPE | NORMAL CYCLIC PREFIX | | | EXTENDED CYCLIC PREFIX | | |
|---|---|---|---|---|---|---|
| | S | L | S+L | S | L | S+L |
| TYPE A | {0,1,2,3} | {3,···,14} | {3,···,14} | {0,1,2,3} | {3,···,12} | {3,···,12} |
| TYPE B | {0,···,12} | {2,4,7} | {2,···,14} | {0,···,10} | {2,4,6} | {2,···,12} |

EP 4 057 733 A1

FIG. 2

FIG. 3

FIG. 4A

TDRA : S=2, L=2, K0=1

1 SYMBOL                    SLOT #0                                    SLOT #1

CORESET

REFERENCE POINT    PDSCH

FIG. 4B

TDRA : S=4, L=2, K0=1

1 SYMBOL                    SLOT #0                                    SLOT #1

CORESET

REFERENCE POINT    PDSCH

TDRA : S=15, L=2, K0=1

1 SYMBOL          SLOT #0                              SLOT #1

CORESET

REFERENCE POINT

REFERENCE POINT          PDSCH

FIG. 5

EP 4 057 733 A1

FIG. 6

FIG. 7

1 SYMBOL

15kHz

CORESET

SLOT #0

TDRA : S=2, L=4, K0=1

30kHz

PDSCH

SLOT #0

SLOT #1

REFERENCE POINT

FIG. 8

1 SYMBOL

15kHz

CORESET

SLOT #0

TDRA : S=2, L=4, K0=1

30kHz

PDSCH

SLOT #0

SLOT #1

REFERENCE POINT

FIG. 9

EP 4 057 733 A1

1 SYMBOL

15kHz

CORESET

SLOT #0

TDRA : S=2, L=4, K0=1

30kHz

PDSCH

SLOT #0

SLOT #1

REFERENCE POINT

FIG. 10

EP 4 057 733 A1

FIG. 11

1 SYMBOL

15kHz

CORESET

SLOT #0

TDRA : S=2, L=4, K0=1

30kHz

PDSCH

SLOT #0

SLOT #1

REFERENCE POINT

120kHz

DCI

SLOT #0 | SLOT #1 | SLOT #2 | SLOT #3

CORESET

TDRA : S=2, L=4, K0=1

1 SYMBOL

60kHz

SLOT #0 | SLOT #1

REFERENCE POINT

FIG. 12

EP 4 057 733 A1

120kHz

DCI

| SLOT #0 | SLOT #1 | SLOT #2 | SLOT #3 |

CORESET

TDRA : S=2, L=4, K0=1

1 SYMBOL

60kHz

SLOT #0

SLOT #1

REFERENCE POINT

FIG. 13

EP 4 057 733 A1

FIG. 14

FIG. 15

EP 4 057 733 A1

FIG. 16

10, 20

1001
PROCESSOR

1007

1004
COMMUNICATION APPARATUS

1002
MEMORY

1005
INPUT APPARATUS

1003
STORAGE

1006
OUTPUT APPARATUS

FIG. 17

## INTERNATIONAL SEARCH REPORT

| International application No. |
|---|
| PCT/JP2019/044021 |

A.  CLASSIFICATION OF SUBJECT MATTER
Int.Cl.  H04W72/04(2009.01)i

According to International Patent Classification (IPC) or to both national classification and IPC

B.  FIELDS SEARCHED

Minimum documentation searched (classification system followed by classification symbols)
Int.Cl.  H04W4/00-H04W99/00, H04B7/24-H04B7/26

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | VIVO, Remaining issues of cross-carrier scheduling with mix numerologies [online], 3GPP TSG RAN WG1 #97 R1-1906183, 13 May 2019 | 1-6 |
| A | VIVO, Cross-carrier scheduling with different numerologies [online], 3GPP TSG RAN WG1 #96b R1-1904112, 08 April 2019 | 1-6 |

☒  Further documents are listed in the continuation of Box C.       ☐  See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 22.11.2019 | 03.12.2019 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/044021 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | SPREADTRUM COMMUNICATIONS, Discussion on cross-carrier scheduling with different numerologies [online], 3GPP TSG RAN WG1 #97 R1-19xxxxx, 13 May 2019 | 1-6 |
| A | QUALCOMM INCORPORATED, Cross-Carrier Scheduling with Different Numerologies [online], 3GPP TSG RAN WG1 #96b R1-1905279, 08 April 2019 | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010